# FASCICULE DE BREVET EUROPEEN

(11) **EP 1 778 456 B1**
(45) Date de publication et mention de la délivrance du brevet: **02.09.2009**
(21) Numéro de dépôt: 05796080.9
(22) Date de dépôt: 08.08.2005
(51) Int. Cl.: B29C 65/74, B29C 65/08

(54) **PROCEDE ET DISPOSITIF POUR TRAVAILLER UNE BANDE DE MATIERE PAR ULTRASONS**
VERFAHREN UND VORRICHTUNG ZUR ULTRASCHALLVERARBEITUNG EINER MATERIALBAHN
METHOD AND DEVICE FOR ULTRASOUND PROCESSING OF A MATERIAL WEB

(30) Priorité: 10.08.2004 FR 0408830
(43) Date de publication de la demande: 02.05.2007
(73) Titulaire: Texti Sonics SAS, 42100 Saint Etienne (FR)
(72) Inventeur: ABATE, Pietro, F-42000 Saint Etienne (FR)
(74) Mandataire: Poncet, Jean-François
(86) Numéro de dépôt international: PCT/FR2005/002046
(87) Numéro de publication internationale: WO 2006/021669

(56) Documents cités:
- EP-A- 0 498 364
- WO-A-01/12422
- US-A- 4 410 383

## Description

### DOMAINE TECHNIQUE DE L'INVENTION

La présente invention concerne les procédés et dispositifs à réglage manuel, permettant de travailler une bande ou une nappe de matière par ultrasons, en particulier les bandes ou nappes de matière textile à base de matériaux thermofusibles.

On utilise couramment les ultrasons pour travailler des matériaux thermofusibles, par exemple pour réaliser une coupe, une soudure, un laminage.

Pour cela, on connaît déjà des appareils à réglage manuel. Ces appareils comprennent généralement une sonotrode, associée fonctionnellement à un convertisseur d'ultrasons qui lui applique une vibration à fréquence ultrasonore. La sonotrode est tenue en opposition avec un contre-outil, de part et d'autre d'une zone de travail dans laquelle est introduit le matériau à travailler. La sonotrode est portée par une première partie de corps de dispositif, tandis que le contre-outil est tenu par une seconde partie de corps de dispositif. Les première et seconde parties de corps de dispositif sont articulées l'une par rapport à l'autre selon un axe transversal, de façon à modifier, par rotation relative des première et seconde parties de corps de dispositif autour de l'axe transversal, la distance entre la sonotrode et le contre-outil. Des moyens élastiques sollicitent élastiquement en rotation relative les première et seconde parties de corps de dispositif dans le sens du rapprochement relatif entre la sonotrode et le contre-outil dans la zone de travail.

Un tel appareil à réglage manuel tel que défini ci-dessus est décrit dans le document WO 01/12422. Dans cet appareil, l'axe transversal de rotation entre les première et seconde parties de corps de dispositif est proche de la zone de travail, de sorte qu'une rotation relative selon un angle donné autour de l'axe transversal ne produit qu'un faible déplacement relatif de la sonotrode et du contre-outil. Une molette permet de régler la force d'appui des moyens élastiques, et donc la force de compression du matériau à travailler entre la sonotrode et le contre-outil. La molette et les moyens élastiques sont placés entre les première et seconde parties de corps de dispositif au niveau de la sonotrode, c'est-à-dire peu à l'écart de l'axe de pivotement. Il en résulte un manque de précision de positionnement relatif de la sonotrode et du contre-outil.

Dans un autre appareil à réglage manuel, décrit dans le document US 4,410,383, l'axe transversal de rotation entre les première et seconde parties de corps de dispositif est à l'écart de la zone de travail, au milieu d'un levier dont la première extrémité porte le contre-outil et dont la seconde extrémité est munie d'un tirant vertical sollicité par un ressort assurant le rapprochement relatif entre la sonotrode et le contre-outil. Un écrou vissé sur le tirant permet de régler la force d'appui exercée par le ressort. Une vis transversale engagée dans un trou du levier vient buter contre un bloc fixe pour limiter, de façon réglable, la rotation du levier et donc le rapprochement relatif entre la sonotrode et le contre-outil. Du fait de l'écart important entre l'axe de rotation et la zone de travail, le dispositif manque de précision pour le positionnement relatif de la sonotrode et du contre-outil.

D'autre part, le vissage plus ou moins important de la vis transversale en butée contre le bloc fixe, pour régler la limite de rapprochement relatif entre la sonotrode et le contre-outil, modifie sensiblement l'état de compression du ressort et la force élastique d'appui de la sonotrode et du contre-outil sur la matière à souder. Les réglages de la force d'appui et de la position relative entre la sonotrode et le contre-outil sont interdépendants, ce qui complique l'utilisation du dispositif, et ce qui nuit à la précision et à la reproductibilité des réglages.

Un autre appareil est décrit dans le document EP-A-0 498 364.

Dans tous les cas, les vibrations ultrasonores de la sonotrode produisent la fusion totale ou partielle de la partie de matériau disposée entre la sonotrode et le contre-outil. Le résultat obtenu dépend de plusieurs paramètres, et notamment de : la vitesse de défilement du matériau entre la sonotrode et le contre-outil, l'amplitude des vibrations ultrasonores appliquées à la sonotrode par le convertisseur d'ultrasons, la pression d'appui de la sonotrode en direction du contre-outil, la forme de la sonotrode et la forme du contre-outil.

Selon une première application, le contre-outil est une lame circulaire. La fusion du matériau par les ultrasons produit alors une coupe au droit de l'arête de la lame circulaire, ainsi qu'une soudure partielle continue des fibres de matière textile les unes avec les autres de part et d'autre de la ligne de coupe.

Selon une seconde application, l'outil est un rouleau rotatif à surface texturée. Les ultrasons produisent alors une soudure par points dans la région entre la sonotrode et le rouleau, et l'appareil comporte une lame mécanique qui découpe la matière textile en aval de la zone soudée.

Ces dispositifs connus produisent un résultat dont la qualité est aléatoire. Le plus souvent, on constate une insuffisance de fusion, et donc une insuffisance de soudure, qui entraîne un risque d'effilochage de la matière textile après la coupe. A l'inverse, on constate souvent la présence d'une fusion trop importante du matériau, qui provoque une plastification des zones soudées, accroissant leur rigidité et leur fragilité, faisant apparaître un risque de déchirement ultérieur de la matière textile.

Le résultat dépend également de la nature de la matière à travailler. Il est ainsi très difficile de maîtriser le résultat obtenu.

En outre, on constate régulièrement une usure prématurée des contre-outils et des sonotrodes, ce qui nécessite des opérations de maintenance pour changer ces pièces, à défaut de quoi le résultat obtenu devient encore plus aléatoire.

On connaît également des dispositifs plus complexes dans lesquels le déplacement de la sonotrode par rapport au contre-outil est assuré par des moyens hydrauliques ou pneumatiques, avec des capteurs pour contrôler le résultat obtenu et piloter le déplacement relatif de la sonotrode par rapport au contre-outil. Mais ces appareils sont très complexes et onéreux, et nécessitent de disposer d'une source d'énergie pneumatique ou hydraulique, ce qui les rend inapplicables dans de nombreuses conditions d'utilisation, par exemple en sortie de métiers à tisser circulaires.

### EXPOSE DE L'INVENTION

Un premier problème proposé par la présente invention est de concevoir des perfectionnements aux dispositifs de travail par ultrasons à moyens de réglage manuel, en vue de garantir la régularité du résultat de soudure ou de coupe obtenu sur un matériau thermofusible à travailler, en particulier sur une matière textile thermofusible à travailler, et cela sans recourir à l'utilisation de sources d'énergie pneumatiques ou hydrauliques extérieures.

L'invention vise en particulier à éviter une fusion trop importante d'un tissu thermofusible, une telle fusion trop importante conduisant à l'altération ou même à la destruction des qualités techniques du tissu. Elle vise aussi à éviter une fusion insuffisante.

Un autre problème proposé par l'invention est de supprimer les risques d'effilochage ultérieur d'un tissu thermofusible découpé par ultrasons, de part et d'autre de la ligne de coupe.

Simultanément, l'invention permet de réduire l'usure des sonotrodes et des contre-outils.

L'invention résulte de l'analyse détaillée des causes possibles des défauts constatés lors de l'utilisation des dispositifs connus à réglage manuel.

Lors de l'avance du matériau entre la sonotrode et le contre-outil, les vibrations ultrasonores provoquent la fusion progressive de la matière thermofusible, et donc la pénétration relative de la sonotrode et/ou de l'outil dans la matière thermofusible. La fusion est efficace tant que la pression exercée sur la matière thermofusible entre la sonotrode et le contre-outil est importante. Par contre, lorsque cette pression disparaît, il n'y a plus de transmission importante d'énergie ultrasonore dans le matériau, et la fusion s'interrompt. De la sorte, la sonotrode et/ou le contre-outil pénètrent progressivement dans la matière thermofusible jusqu'à atteindre un écartement relatif minimum non nul que l'on peut rendre réglable par des moyens de butée de limitation de rapprochement tels que ceux décrits dans le document US 4,410,383. S'ils sont correctement réglés, ces moyens permettent d'obtenir une fusion contrôlée. On évite ainsi une fusion trop importante du tissu thermofusible, en conservant par conséquent les qualités techniques du tissu. Simultanément, on évite tout risque de contact entre la sonotrode et le contre-outil, contact susceptible de provoquer l'usure des deux éléments sous l'effet des frottements produits par les vibrations ultrasonores.

Mais, dans un tel dispositif connu, une première difficulté vient de l'interdépendance entre le réglage de la force d'appui ou de pression et le réglage de l'écartement relatif minimum par la vis transversale. Il en résulte en effet un manque de précision de la pression exercée sur la matière thermofusible entre la sonotrode et le contre-outil, et ce paramètre affecte de manière sensible la qualité et la régularité de la soudure réalisée.

Dans le but de résoudre le problème proposé par l'invention, à savoir de garantir la régularité du résultat de soudure ou de coupe obtenu sur un matériau thermofusible à travailler, on prévoit, selon l'invention, des moyens pour que la modification d'écart minimum par l'organe de réglage manuel d'écart minimum ne modifie pas la force élastique d'appui produite par les moyens élastiques, et ne modifie donc pas la pression exercée sur la matière thermofusible par la sonotrode et le contre-outil.

Le réglage que l'opérateur doit effectuer le plus fréquemment est en effet un réglage de valeur d'écart minimum. La détermination d'un réglage approprié en fonction du produit à travailler est simplifiée par le fait que le réglage d'écart minimum est rendu indépendant du réglage de la force d'appui des moyens élastiques. Il est aussi possible de régler successivement les deux paramètres de force élastique d'appui et d'écart minimum.

Le réglage de la force élastique d'appui permet d'adapter le dispositif à des natures ou des épaisseurs différentes de bande ou nappe de matière à travailler : l'opérateur pourra choisir une force élastique d'appui juste suffisante pour que, lors de la fusion de la matière dans la zone de travail, la sonotrode et le contre-outil se rapprochent jusqu'à atteindre l'écart minimum. De la sorte, par exemple en cas de surépaisseur momentanée de la bande ou nappe de matière à travailler, celle-ci peut aisément et sans dommage écarter autant que nécessaire la sonotrode et le contre-outil en comprimant les moyens élastiques.

En pratique, ces effets seront obtenus par un dispositif tel que défini dans la revendication 1, comprenant :
- une sonotrode associée fonctionnellement à un convertisseur d'ultrasons et portée par une première partie de corps de dispositif, d'un premier côté d'une zone de travail,
- un contre-outil tenu en opposition avec la sonotrode par une seconde partie de corps de dispositif, de l'autre côté de la zone de travail,
- les première et seconde parties de corps de dispositif étant déplaçables l'une par rapport à l'autre selon un mouvement produisant le déplacement relatif de la sonotrode et du contre-outil vers ou à l'écart l'un de l'autre,
- des moyens mécaniques à réglage manuel, disposés entre une première porion de liaison de la première partie de corps de dispositif et une seconde portion de liaison de la seconde partie de corps de dispositif, ayant des moyens élastiques pour solliciter élastiquement en déplacement relatif les première et seconde portions de liaison dans le sens du rapprochement relatif de la sonotrode et du contre-outil dans la zone de travail,
- des moyens de réglage de force élastique d'appui, aptes à modifier l'état de compression des moyens élastiques, dans les moyens mécaniques à réglage manuel,
- dans les moyens mécaniques à réglage manuel, des moyens de butée de limitation de rapprochement, qui s'opposent au déplacement relatif entre les première et seconde portions de liaison dans le sens d'un rapprochement relatif de la sonotrode et du contre-outil en deçà d'un écart minimum, tout en autorisant leur déplacement dans le sens opposé,
- dans les moyens mécaniques à réglage manuel, un organe de réglage manuel d'écart minimum, par lequel on peut régler la position de la butée de limitation de rapprochement et régler ainsi l'écart minimum,
- dans les moyens mécaniques à réglage manuel, les moyens de butée de limitation de rapprochement et les moyens élastiques sont en appui direct ou indirect contre l'organe de réglage manuel d'écart minimum, de sorte que l'actionnement de l'organe de réglage d'écart minimum pour modifier l'écart minimum ne modifie pas la force élastique d'appui produite par les moyens élastiques.

Selon un mode de réalisation avantageux, un tel dispositif selon l'invention peut être tel que :
- les moyens de limitation de rapprochement comportent une butée venant s'engager sélectivement en appui contre l'une des portions de liaison, et sont portés par l'organe de réglage manuel d'écart minimum,
- l'organe de réglage manuel d'écart minimum est monté mobile sur l'autre des portions de liaison,
- les moyens élastiques sont engagés fonctionnellement entre l'organe de réglage manuel.d'écart minimum et ladite une des portions de liaison.

Dans ce cas, on peut par exemple prévoir que, dans les moyens mécaniques à réglage manuel:
- les moyens de butée de limitation de rapprochement comprennent un tirant engagé à coulissement dans l'une au moins des portions de liaison des première et seconde parties de corps de dispositif, le tirant comportant une tête de première extrémité engagée en appui axial contre ladite une des portions de liaison,
- le tirant comporte un corps fileté traversant un trou axial d'une molette filetée de réglage manuel d'écart minimum et recevant un écrou de réglage en appui axial contre ladite molette filetée de réglage,
- la molette filetée de réglage est vissée fonctionnellement dans un alésage taraudé de l'autre des portions de liaison,
- au moins un ressort de compression est engagé axialement entre la molette filetée de réglage et ladite une des portions de liaison, à l'opposé de l'appui de la tête de première extrémité.
   Une telle structure est simple, fiable et robuste.
   De préférence, ladite une des portions de liaison est la première portion de liaison de la première partie de corps, et ladite autre des portions de liaison est la seconde partie de liaison de la seconde partie de corps. De la sorte, lors du réglage, l'utilisateur agit sur des organes portés par la partie fixe du dispositif, ce qui garantit une meilleure précision du réglage.
   De préférence, les première et seconde parties de corps de dispositif sont articulées en rotation l'une par rapport à l'autre selon un axe transversal proche de la zone de travail, tandis que les portions de liaison des première et seconde parties de corps de dispositif, qui reçoivent les moyens mécaniques à réglage manuel, sont opposées à la zone de travail par rapport à l'axe transversal et sont à l'écart de l'axe transversal, au voisinage de la partie distale du convertisseur d'ultrasons. On augmente ainsi très sensiblement la précision de réglage de l'écartement minimum, précision qui est nécessaire pour s'adapter à des épaisseurs généralement minces de tissus thermofusibles, et pour garantir une régularité encore meilleure du résultat de soudure.
   Le ou les ressorts de compression peuvent avantageusement être positionnés sensiblement à la même distance que les moyens de butée de limitation de rapprochement, vis-à-vis de l'axe transversal, afin d'améliorer encore la précision de réglage.
   De préférence, pour améliorer encore la précision de réglage, on peut prévoir que le ressort de compression soit engagé autour du tirant.
   Selon une réalisation simple, la molette filetée de réglage est bloquée sélectivement en position sur la portion de liaison correspondante par un contre-écrou vissé sur un tronçon fileté.
   Une amélioration de la régularité des résultats de soudure peut être encore obtenue en perfectionnant l'organe de réglage manuel d'écart minimum, par un rattrapage permanent de jeu, en prévoyant que
- la molette filetée de réglage est bloquée sélectivement en position sur la portion de liaison correspondante par une vis transversale vissée dans un trou taraudé transversal de la portion de liaison correspondante et venant en appui radial sur le tronçon intérieur de la molette filetée de réglage,
- un moyen élastique de rattrapage de jeu est engagé entre la molette filetée de réglage et la portion de liaison correspondante pour repousser en permanence la molette filetée de réglage à l'écart de l'autre portion de liaison.

Le dispositif défini ci-dessus peut être agencé pour réaliser la coupe ou la soudure de produits thermofusibles qui défilent en continu.

Selon une première application, on peut prévoir que:
- le contre-outil comprend un rouleau rotatif à axe transversal, comportant sur sa surface active des reliefs appropriés,
- la sonotrode comporte une surface active cylindrique d'axe transversal.

Un tel dispositif peut réaliser une soudure en continu par points autour d'une ligne médiane.

Selon une autre application, on peut prévoir que :
- le contre-outil comporte une surface active à arête circulaire d'axe transversal, et est fixe sur la seconde partie de corps de dispositif,
- la sonotrode comporte une surface active cylindrique d'axe transversal.

Un tel dispositif réalise une coupe ou un sillon longitudinal par ultrasons, ainsi qu'une soudure des deux zones latérales proches de la ligne de coupe.

Dans l'une et l'autre des applications ci-dessus, le dispositif peut comporter une lame de coupe, placée en aval de la zone de travail. On réalise alors un appareil qui assure la coupe d'un tissu thermofusible en zone médiane d'une zone de soudure.

Selon un autre aspect, l'invention propose un procédé pour travailler une bande ou nappe de matière par ultrasons, au moyen d'un dispositif tel que défini ci-dessus, dans lequel on règle tout d'abord une force d'appui par actionnement des moyens de réglage de force élastique d'appui ; puis on règle un écart minimum non nul par actionnement de l'organe de réglage manuel d'écart minimum, de sorte qu'on maintient un écartement supérieur à l'écart minimum non nul entre la sonotrode et le contre-outil, tout en maintenant une force élastique d'appui déterminée de la sonotrode vers le contre-outil contre la bande ou nappe de matière lorsque l'écartement est supérieur à l'écart minimum non nul.

De préférence, dans un tel procédé :
- on réalise par ultrasons, dans la bande ou nappe de matière à travailler, une zone fusionnée continue à sillon longitudinal bordée ou non d'une ou deux zones de soudure par points,
- on découpe mécaniquement la bande ou nappe de matière dans la zone fusionnée continue ainsi réduite en épaisseur et encore chaude.

Pour résoudre un autre problème d'effilochage, on peut prévoir un dispositif dans lequel :
- le contre-outil comprend une partie centrale étroite, fixe ou rotative, orientée longitudinalement dans le sens de progression de la bande ou nappe de matière à travailler, et ayant une arête centrale dans le plan longitudinal contenant la direction axiale de la sonotrode,
- le contre-outil comprend deux parties rotatives cylindriques à reliefs appropriés de part et d'autre de la partie centrale,
- l'arête centrale dépasse légèrement au-delà de la génératrice sommitale des parties rotatives cylindriques dans la zone de travail,
- une lame de coupe fixe est disposée en aval de la zone de travail et dans l'axe de la partie centrale.

De la sorte, la partie centrale étroite à arête centrale réalise un sillon longitudinal médian, pouvant être considéré comme une coupe partielle par ultrasons, laissant subsister une épaisseur réduite de matière le long de la ligne de coupe, épaisseur qu'il est ensuite très facile de séparer par la lame de coupe fixe en aval. Simultanément, la partie centrale étroite à arête centrale assure une soudure continue des deux bords de la ligne de coupe, sur une largeur d'environ 1 mm, soudure qui vient compléter la soudure par points réalisée par les parties rotatives cylindriques latérales sur une largeur pouvant aller de quelques millimètres jusqu'à 20 à 25 millimètres environ. Il en résulte une élimination du risque d'effilochage du tissu thermofusible de part et d'autre de la ligne de coupe, tout en conservant la souplesse et les qualités techniques du tissu.

De préférence, les reliefs sont des picots ayant une section inférieure ou égale à 1 mm², et répartis selon un pas de 1 mm à 2 mm environ.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue de côté schématique d'un dispositif selon un premier mode de réalisation de la présente invention ;
- la figure 2 est une vue de face du dispositif de la figure 1 ;
- la figure 3 est une vue de côté schématique d'un dispositif selon un second mode de réalisation de la présente invention ;
- la figure 4 est une vue de face du dispositif de la figure 3 ;
- la figure 5 est une vue de côté d'un dispositif selon un autre mode de réalisation de l'invention, comportant une sonotrode affûtée ;
- la figure 6 est une vue de face du dispositif de la figure 5 ;
- la figure 7 est une vue partielle de côté en coupe longitudinale des moyens mécaniques à réglage manuel selon un mode de réalisation de la présente invention, lorsque le dispositif est en butée avec un premier réglage de l'écart minimum ;
- la figure 8 est une vue similaire de la figure 7, le dispositif étant à l'écart de la butée, lors d'un écartement supérieur à l'écart minimum sous l'effet d'un effort appliqué à la sonotrode ;
- la figure 9 est une vue similaire de la figure 7, le dispositif étant en butée mais avec un autre réglage d'écart minimum plus réduit ;
- la figure 10 est une vue schématique de côté de la zone de travail, illustrant les possibilités de réglage et de mouvement relatif d'une sonotrode et d'un contre-outil ;
- la figure 11 est une vue de côté schématique d'une structure particulière de contre-outil selon un mode de réalisation de l'invention, adapté pour la coupe partielle et la soudure multipoints par ultrasons ;
- la figure 12 est une vue de dessus du contre-outil de la figure 11 ;
- la figure 13 est une vue de face en coupe transversale partielle du contre-outil de la figure 11, avec la sonotrode et la matière à travailler ;
- la figure 14 illustre en perspective le résultat obtenu par un contre-outil des figures 11 à 13, associé à une lame fixe en aval ;
- la figure 15 est une vue de face en coupe transversale d'un contre-outil selon le mode de réalisation des figures 3 et 4, avec la sonotrode et la matière à travailler ;
- la figure 16 illustre en perspective le résultat obtenu par un contre-outil de la figure 15, associé à une lame fixe en aval ;
- la figure 17 est une vue similaire de la figure 7, le dispositif étant en butée mais avec un autre réglage de force élastique d'appui ;
- la figure 18 est une vue de côté d'un contre-outil selon une variante de la réalisation de la figure 11, pour la coupe partielle et la soudure multipoints par ultrasons ;
- la figure 19 est une vue de dessus du contre-outil de la figure 18 ; et
- la figure 20 est une vue partielle de côté en coupe longitudinale des moyes mécaniques de réglage selon un autre mode de réalisation de l'invention.

### DESCRIPTION DES MODES DE REALISATION PREFERES

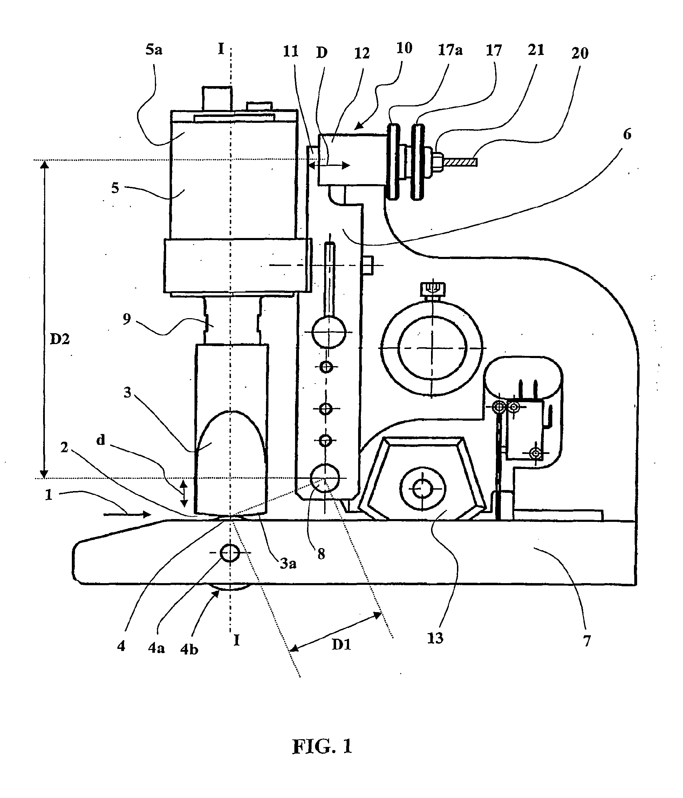

Les figures 1 à 6 illustrent trois modes de réalisation d'un dispositif de travail de bandes de matière par ultrasons selon la présente invention, donnés à titre illustratif mais non limitatif.

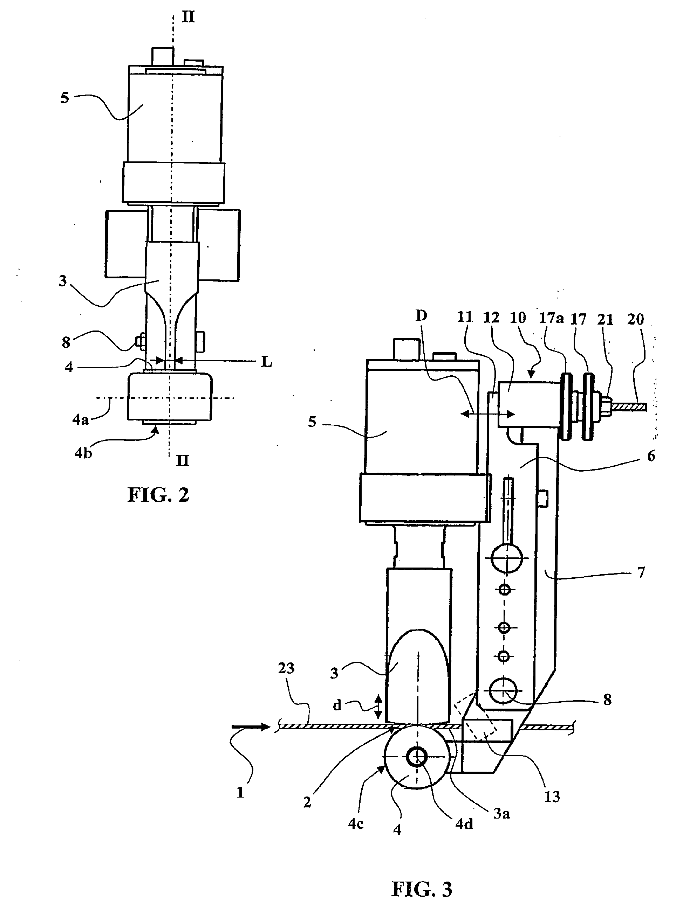

Le dispositif des figures 1 et 2 est un appareil de soudage par points en continu par ultrasons avec coupe mécanique intégrée, qui réalise deux soudures par points latérales sur une largeur de plusieurs millimètres, puis une coupe mécanique dans la zone médiane entre les soudures.

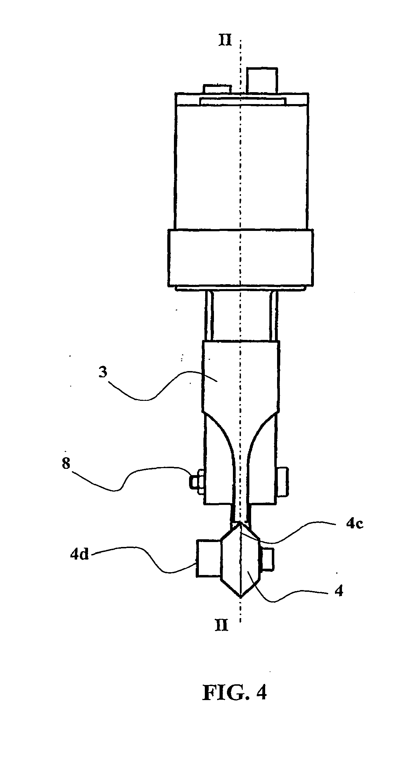

Le dispositif des figures 3 et 4 est un appareil de coupe et de soudage en continu par ultrasons, qui réalise une coupe soudante avec deux soudures continues sur une largeur d'environ 1 mm chacune de part et d'autre de la ligne de coupe.

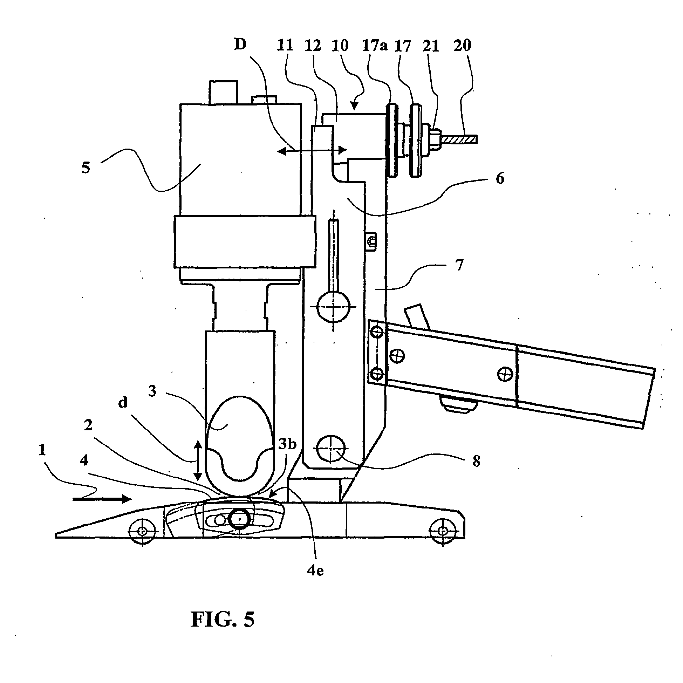

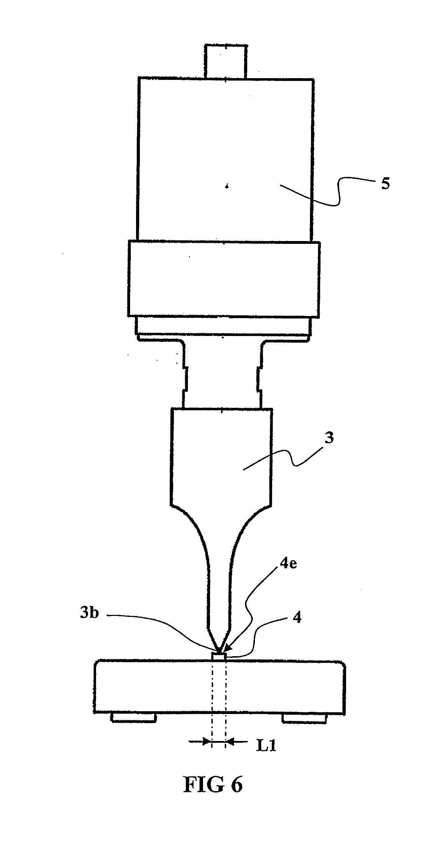

Le dispositif des figures 5 et 6 est un autre dispositif de coupe et soudage en continu par ultrasons.

Dans chacun des trois modes de réalisation, on retrouve la plupart des éléments de structure, et les éléments correspondants sont repérés par les mêmes références numériques.

Dans chaque cas, le dispositif est en principe destiné à travailler une bande ou nappe de matière 23 thermofusible qui est introduite, selon une direction de progression indiquée par la flèche 1, vers une zone de travail 2 située entre une sonotrode 3 et un contre-outil 4.

Le dispositif comprend ainsi la sonotrode 3, associée fonctionnellement à un convertisseur d'ultrasons 5 et portée par une première partie de corps de dispositif 6.

Le dispositif comprend le contre-outil 4, tenu en opposition avec la sonotrode 3 par une seconde partie de corps de dispositif 7, de l'autre côté de la zone de travail 2.

La sonotrode 3, le convertisseur d'ultrasons 5 et le contre-outil 4 sont alignés selon une direction axiale I-I passant par la zone de travail 2 et généralement perpendiculaire à la direction de progression 1. Le convertisseur d'ultrasons 5 produit des vibrations axiales selon la direction I-I, vibrations à fréquences ultrasonores qui sont transmises à la sonotrode 3 par un élément de transmission et/ou d'amplification 9, par exemple un booster.

La première partie de corps de dispositif 6 et la seconde partie de corps de dispositif 7 sont articulées l'une par rapport à l'autre selon un axe transversal 8.

De préférence, l'axe transversal 8 est proche de la zone de travail 2, et décalé latéralement selon la direction de progression 1. On désigne par D1 la distance entre la zone de travail 2 et l'axe transversal 8.

Dans ce mode de réalisation, les première 6 et seconde 7 parties de corps de dispositif sont déplaçables l'une par rapport à l'autre selon un mouvement de rotation produisant le déplacement relatif de la sonotrode 3 et du contre-outil 4 vers ou à l'écart l'un de l'autre dans la zone de travail 2.

Des moyens mécaniques à réglage manuel 10 sont interposés entre une portion de liaison 11 de la première partie de corps de dispositif 6 et une portion de liaison 12 de la seconde partie de corps de dispositif 7. Comme on le voit sur les figures, les portions de liaison 11 et 12 des première 6 et seconde 7 parties de corps de dispositif sont fortement à l'écart de l'axe transversal 8, au voisinage de la partie distale 5a du convertisseur d'ultrasons 5. On désigne par D2 la distance entre l'axe de rotation 8 et les portions de liaison 11 et 12.

Egalement, comme illustré sur les figures, les moyens mécaniques à réglage manuel 10 sont opposés à la zone de travail 2 par rapport à l'axe transversal 8.

De la sorte, un déplacement relatif donné D entre les portions de liaison 11 et 12 des première 6 et seconde 7 parties de corps de dispositif produit un pivotement relatif des première 6 et seconde 7 parties de corps de dispositif l'une par rapport à l'autre autour de l'axe transversal 8, ce qui produit un déplacement simultané d de la sonotrode 3 par rapport au contre-outil 4 selon la direction axiale I-I.

En choisissant de placer l'axe transversal 8 en position proche de la zone de travail 2, et de placer les portions de liaison 11 et 12 à l'écart de l'axe transversal 8, c'est-à-dire en choisissant une distance D2 nettement supérieure à la distance D1, le déplacement d entre la sonotrode 3 et le contre-outil 4 aura une amplitude nettement plus faible que le déplacement D des deux portions de liaison 11 et 12 des première 6 et seconde 7 parties de corps de dispositif, de sorte que la précision de réglage de la distance d sera nettement augmentée. L'homme du métier pourra choisir le rapport D2/D1 selon la précision recherchée.

Dans le mode de réalisation illustré sur les figures 1 et 2, la sonotrode 3 comprend une surface active cylindrique 3a d'axe transversal, selon une largeur L (figure 2) pouvant être relativement réduite, par exemple de quelques millimètres, ou de 20 à 25 mm en fonction des besoins, tandis que le contre-outil 4 comprend un rouleau rotatif à axe transversal-4a et dont la surface active 4b comporte des picots ou reliefs de forme appropriée pour réaliser, dans la matière à travailler, des soudures par points en regard de la surface active 3a de la sonotrode 3.

Le dispositif comprend en outre une lame de coupe fixe 13, placée en aval de la zone de travail 2 dans le sens de progression 1 de la matière à travailler. La lame de coupe fixe 13 est alignée avec le plan médian II-II (figure 2) de la sonotrode 3.

Dans le mode de réalisation des figures 3 et 4, la sonotrode 3 a sensiblement la même forme que dans le mode de réalisation des figures 1 et 2, avec une surface active cylindrique 3a d'axe transversal, tandis que le contre-outil 4 comporte une surface active à arête circulaire 4c d'axe transversal 4d. En fonctionnement, le contre-outil 4 est fixe en rotation autour de son axe transversal 4d, de façon à séparer le matériau à travailler lors de son passage entre la sonotrode 3 et le contre-outil 4.

Selon une variante, le mode de réalisation des figures 3 et 4 peut être associé à une lame de coupe 13, illustrée en pointillés sur la figure 3, disposée en aval de la zone de travail 2 dans le plan médian II-II.

Dans le mode de réalisation des figures 5 et 6, le contre-outil 4 comporte une surface active 4e cylindrique d'axe transversal, de largeur L1 réduite, tandis que la sonotrode 3 comporte une surface active 3b semi-circulaire affûtée d'axe transversal.

Dans les modes de réalisation des figures 1, 2, 5 et 6, la seconde partie de corps de dispositif 7 est conformée pour être fixée à un support tel qu'un bâti de machine, portant ainsi le contre-outil 4 en position fixe, tandis que la sonotrode 3 et la première partie de corps de dispositif 6 pivotent autour de l'axe transversal 8.

Dans le mode de réalisation des figures 3 et 4, c'est à l'inverse la première partie de corps de dispositif 6 qui est conformée pour être fixée à un support tel qu'un bâti de machine, la sonotrode 3 étant également fixe, tandis que le contre-outil 4 et la seconde partie de corps de dispositif 7 pivotent autour de l'axe transversal 8.

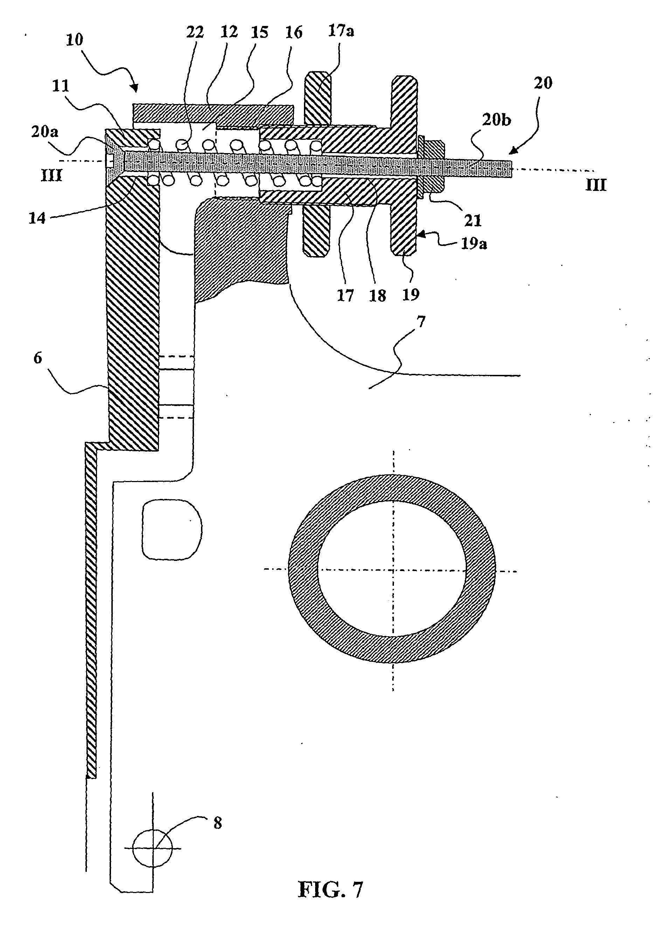

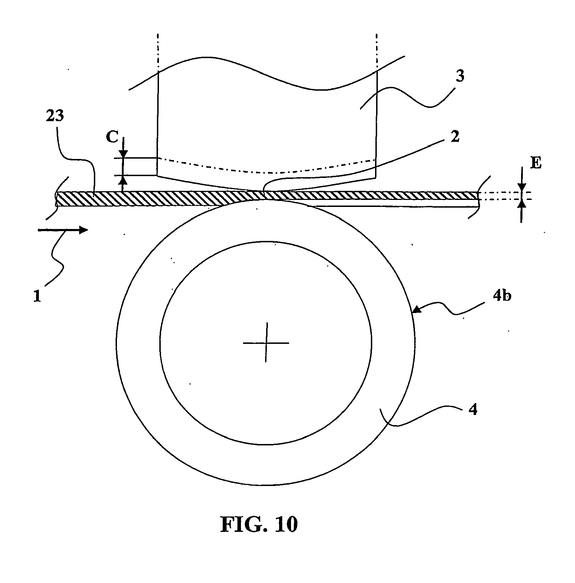

Dans tous les modes de réalisation selon l'invention, les moyens mécaniques à réglage manuel 10 comprennent d'une part des moyens élastiques, tels qu'un ressort 22 (figure 7), pour solliciter élastiquement en déplacement relatif les première 6 et seconde 7 parties de corps de dispositif dans le sens d'un rapprochement relatif de la sonotrode 3 et du contre-outil 4 dans la zone de travail 2 selon la direction axiale I-I (figure 10), et comprennent d'autre part des moyens de butée de limitation de rapprochement, tels qu'un tirant 20 (figure 7), qui interdisent le déplacement relatif des portions de liaison 11 et 12 l'une par rapport à l'autre dans le sens du rapprochement relatif de la sonotrode 3 et du contre-outil 4 dans la zone de travail 2 en deçà d'un écart minimum E. Ainsi, les moyens de butée de limitation 20, maintiennent supérieure à un écart minimum déterminé E la distance axiale entre la sonotrode 3 et le contre-outil 4, en interdisant le déplacement relatif entre la sonotrode 3 et le contre-outil 4 dans le sens du rapprochement en deçà de l'écart minimum E, tout en autorisant leur déplacement dans le sens d'un écartement relatif.

De la sorte, une bande ou nappe de matière 23 relativement épaisse présentée dans la zone de travail 2 selon la direction de progression 1 peut écarter élastiquement la sonotrode 3 et le contre-outil 4, tandis que les moyens élastiques 22 assurent une pression de la bande ou nappe de matière 23 à travailler entre la sonotrode 3 et le contre-outil 4 pour la transmission d'une énergie vibratoire ultrasonore. On produit ainsi le ramollissement ou la fusion partielle de la matière dans la zone de travail 2, sans toutefois autoriser le contact physique entre la sonotrode 3 et le contre-outil 4.

Dans tous les modes de réalisation, les moyens mécaniques à réglage manuel 10 comprennent en outre un organe manuel de réglage de l'écart minimum E, tel qu'une molette 17 filetée de réglage, qui lui-même porte les moyens de butée de limitation de rapprochement 20 et les moyens élastiques ou ressort 22.

On décrira maintenant plus en détail les moyens mécaniques à réglage manuel 10 selon un mode de réalisation possible de la présente invention, tel que représenté sur les figures 7 à 9 et 17, au cours de quatre étapes de fonctionnement.

Sur ces figures, on retrouve la première partie de corps de dispositif 6, la seconde partie de corps de dispositif 7, et l'axe transversal 8, ainsi que la portion de liaison 11 de première partie de corps de dispositif 6 et la portion de liaison 12 de seconde partie de corps de dispositif 7 entre lesquelles sont disposés les moyens mécaniques à réglage manuel 10.

La portion de liaison 11 de première partie de corps de dispositif 6 comporte un trou traversant 14. La portion de liaison 12 de seconde partie de corps de dispositif 7 présente une forme tubulaire dont le logement intérieur 15 comporte un alésage taraudé 16 dans sa partie à l'écart de la portion de liaison 11, lequel alésage taraudé 16 reçoit par vissage une molette 17 filetée de réglage. La molette 17 de réglage comporte un trou axial 18 en alignement avec le trou 14 de la portion 11. La molette 17 comporte une partie externe dépassante 19 pour sa préhension et sa mise en rotation par action manuelle autour de l'axe III-III. Un tirant 20 est engagé à coulissement dans le trou 14 de la première portion de liaison 11 et dans le trou 18 de la molette 17 de réglage, et coulisse donc également dans le logement intérieur 15 de la portion de liaison 12 de seconde partie de corps de dispositif 7.

Le tirant 20 comporte une tête de première extrémité 20a, engagée en appui axial contre la face externe de la portion de liaison 11 de première partie de corps de dispositif 6. Le tirant 20 comporte un corps fileté 20b, qui traverse librement le trou axial 18 de la molette 17 et reçoit un écrou de réglage 21. L'écrou de réglage 21 vient normalement en appui axial contre la face externe 19a de la molette 17. Le tirant 20 est ainsi en appui indirect contre la molette 17. Un ressort de compression 22 hélicoïdal est engagé axialement entre la molette 17 de réglage et la portion de liaison 11 de première partie de corps de dispositif 6, autour du corps fileté 20b du tirant 20. Ainsi, le ressort 22 est en appui contre la molette 17.

Le fonctionnement est le suivant : à l'état de repos, illustré sur la figure 7, le ressort de compression 22 sollicite à l'écart l'une de l'autre les deux portions de liaison 11 et 12 et donc les deux parties de corps de dispositif 6 et 7, tendant ainsi à rapprocher la sonotrode 3 (figures 1 à 6) et le contre-outil 4 selon la direction axiale I-I. Le rapprochement est toutefois limité par le fait que le tirant 20 limite l'écartement des portions de liaison 11 et 12, sa tête 20a restant en appui contre la portion 11 tandis que l'écrou 21 reste en appui contre la molette 17. Le tirant 20, associé à la molette 17 et à l'écrou 21, constitue le moyen de limitation de rapprochement de la sonotrode 3 et du contre-outil 4.

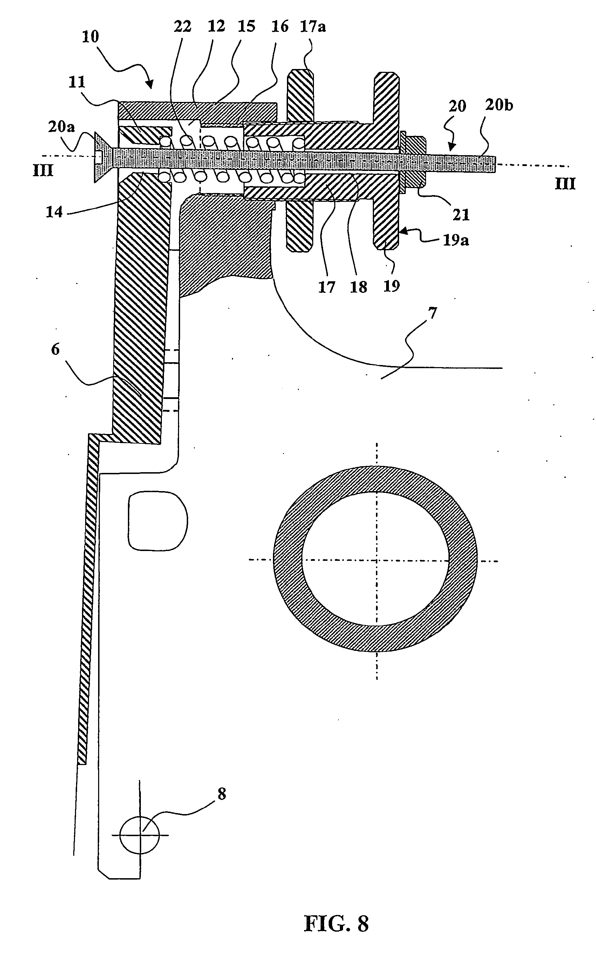

Dans l'hypothèse d'un effort entre la sonotrode 3 et le contre-outil 4, par exemple par l'engagement d'une bande ou nappe de matière 23 épaisse entre la sonotrode 3 et le contre-outil 4, la sonotrode 3 peut s'écarter du contre-outil 4 en comprimant le ressort de compression 22, comme illustré sur la figure 8. Dans ce cas, le tirant 20 coulisse dans la portion de liaison 11 de première partie de corps de dispositif 6. Le ressort 22 détermine la force de rappel de la sonotrode 3 en direction du contre-outil 4, et détermine donc la force de pression exercée sur la bande ou nappe de matière 23 à travailler. Lors de la fusion de la matière à travailler entre la sonotrode 3 et le contre-outil 4, la sonotrode 3 pénètre dans la matière à travailler et le dispositif retourne éventuellement dans la position illustrée sur la figure 7, le tirant 20 limitant alors la pénétration de la sonotrode 3 et du contre-outil 4 dans la matière à travailler.

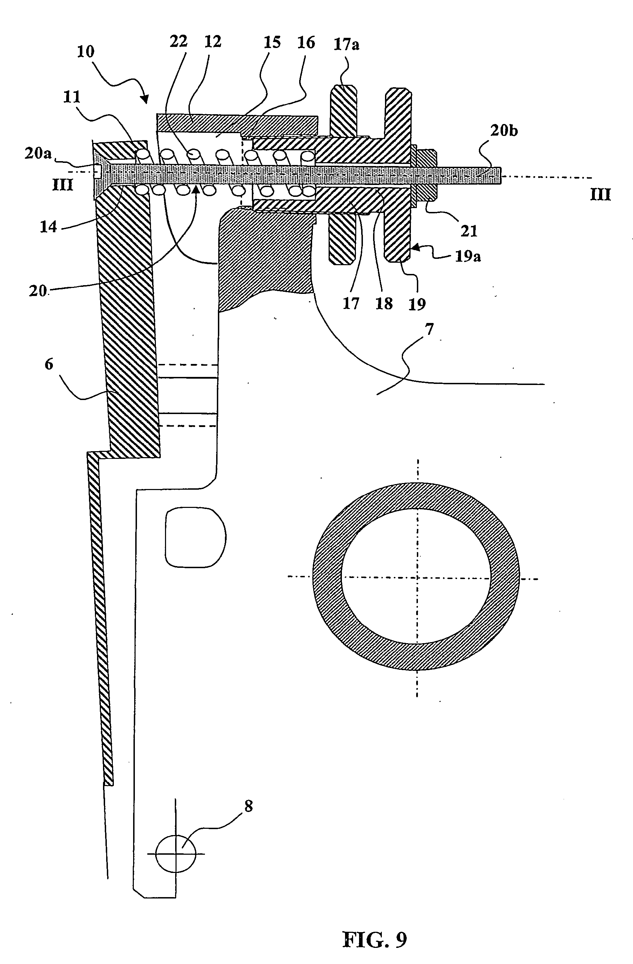

On peut régler la profondeur de pénétration de la sonotrode 3 et du contre-outil 4 dans la bande ou nappe de matière 23 à travailler en vissant ou dévissant la molette par exemple comme illustré sur la figure 9. Comme on le voit sur cette figure, un vissage supplémentaire de la molette 17 a déplacé vers la gauche la molette 17 et la portion de liaison 11 de première partie de corps de dispositif 6, provoquant un rapprochement relatif de la sonotrode 3 par rapport au contre-outil 4, et réalisant ainsi un écart minimum réduit.

De la sorte, le tirant 20 interdit l'écartement relatif des deux portions de liaison 11 et 12 des première 6 et seconde 7 parties de corps de dispositif l'une à l'écart de l'autre au-delà d'une valeur d'écartement maximum réglable par la molette 17. Simultanément, le ressort 22 sollicite les deux portions de liaison 11 et 12 des première 6 et seconde 7 parties de corps de dispositif à l'écart l'une de l'autre.

Le tirant 20 constitue un moyen de butée de limitation de rapprochement, qui limite le rapprochement possible entre la sonotrode 3 et le contre-outil 4. Le moyen de butée maintient ainsi supérieure à un écart minimum E la distance entre la sonotrode 3 et le contre-outil 4.

La molette 17 constitue un organe de réglage manuel d'écart minimum, par lequel on peut régler l'écart minimum E.

En considérant les figures, on voit que les moyens mécaniques de réglage manuel 10 sont agencés de façon que le déplacement de la molette 17 par vissage, qui modifie l'écart minimum entre la sonotrode 3 et le contre-outil 4, ne modifie pas la sollicitation en pivotement produite par les moyens élastiques ou ressort 22, dans la mesure où le ressort 22 n'a pas été comprimé de façon différente lors du passage de la figure 7 à la figure 9. Cet effet est obtenu par le fait que les moyens de butée de limitation de rapprochement 20 et les moyens élastiques 22 sont en appui direct ou indirect contre l'organe de réglage manuel d'écart minimum ou molette 17, par exemple lorsqu'ils sont portés par la molette 17 comme représenté sur les figures.

Comme on le comprend sur les figures 7 à 9 et 17, les moyens de butée de limitation de rapprochement, constitués par le tirant 20, interdisent le déplacement relatif des deux portions de liaison 11 et 12 de première 6 et seconde 7 parties de corps de dispositif dans le sens de leur écartement au-delà d'une valeur d'écartement maximum réglable par la molette 17. Simultanément, les moyens élastiques constitués par le ressort 22 sollicitent les deux portions de liaison 11 et 12 de première 6 et seconde 7 parties de corps de dispositif à l'écart l'une de l'autre pour le rapprochement relatif de la sonotrode 3 et du contre-outil 4.

Il peut toutefois être utile de modifier la force exercée par le ressort 22, en prévoyant des moyens de réglage de force élastique d'appui constitués par l'écrou de réglage 21 vissé sur le tirant 20 et en appui contre la molette 17.

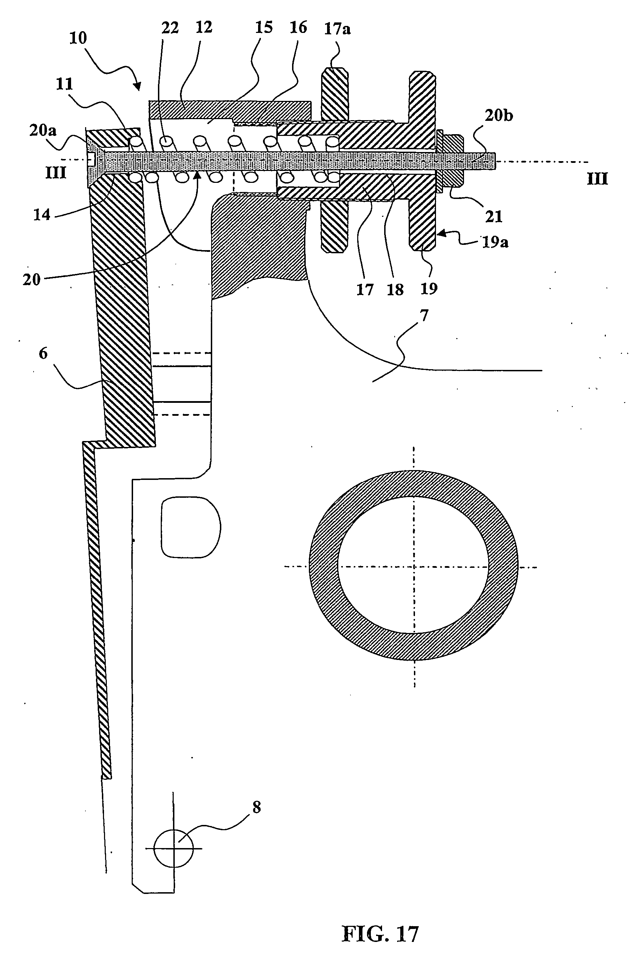

Pour cela, on manoeuvre l'écrou de réglage 21, qui comprime plus ou moins le ressort 22. Une réduction de la compression du ressort 22 par dévissage de l'écrou de réglage 21 pour passer par exemple de la position illustrée sur la figure 7 à la position illustrée sur la figure 17, produit une réduction de la force de rappel de rapprochement exercée par le ressort 22 entre la sonotrode 3 et le contre-outil 4. Un vissage de l'écrou de réglage 21 produit l'effet inverse.

Le dispositif précédemment décrit travaille par pression de la sonotrode 3 et du contre-outil 4 de part et d'autre de la matière à travailler, comme cela se produit dans les dispositifs connus. Cependant, selon l'invention, le dispositif travaille à écartement précis et réglable entre la sonotrode 3 et le contre-outil 4. L'écart minimum E peut être déterminé par l'utilisateur en fonction de l'épaisseur et de la nature du matériau à travailler. Le résultat de fusion du matériau peut être aisément maîtrisé, et devient pratiquement indépendant de la vitesse de défilement du matériau selon la direction de progression 1.

Il en résulte une grande régularité de la soudure par ultrasons et de la coupe. Le dispositif évite une fusion trop importante du tissu thermofusible, ce qui pour certaines matières signifie la destruction des qualités techniques du tissu.

On obtient une meilleure productivité et une réduction de la quantité des rebuts.

La disposition particulière des moyens mécaniques de réglage manuel 10, au voisinage de la partie distale 5a du convertisseur 5, c'est-à-dire avec une distance D2 relativement grande, combinée avec une distance D1 relativement faible, permettent d'obtenir une grande précision de l'approche de la sonotrode 3 par rapport au contre-outil 4, et une grande précision de l'écart minimum E. Cette précision est nécessaire pour contrôler au mieux le résultat de soudure ou de coupe sur une bande de matériau qui est généralement peu épaisse. La précision obtenue est égale ou inférieure à l'amplitude des vibrations ultrasonores de la sonotrode 3.

Simultanément, en cas de surépaisseur de la bande ou nappe de matière à travailler 23, la sonotrode 3 peut s'effacer automatiquement grâce à l'écrasement possible du ressort 22.

La force exercée par le ressort 22 peut être réglée par la manoeuvre de l'écrou de réglage 21, ou encore par le remplacement du ressort 22 par un ressort de raideur différente.

Pour garantir une bonne précision et une bonne reproductibilité de l'écart minimum E, il peut être utile de bloquer sélectivement la position de la molette 17 filetée de réglage manuel d'écart minimum.

Pour cela, dans le mode de réalisation des figures 1 à 9 et 17, la molette 17 peut être bloquée par un contre-écrou 17a vissé sur le tronçon fileté de la molette 17. Le contre-écrou 17a vient en appui axial contre l'extrémité de la portion de liaison 12 tubulaire.

On notera que le serrage du contre-écrou 17a vient plaquer l'une des faces des filets de la molette 17 contre la face correspondante des filets du taraudage 16, ce qui, en présence d'un certain jeu fonctionnel nécessaire, modifie quelque peu le réglage de l'écart minimum E.

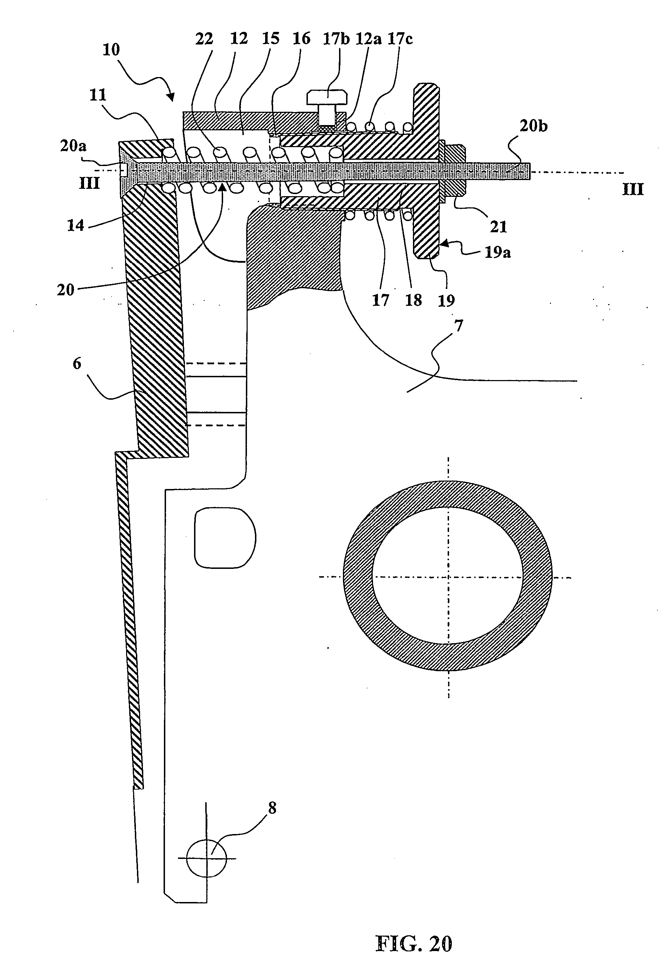

Pour réduire cet effet, et ainsi pour améliorer encore la précision du réglage d'écart minimum E, on pourra préférer le mode de réalisation illustré sur la figure 20, dans lequel la molette 17 filetée de réglage manuel d'écart minimum est bloquée sélectivement en position sur la portion de liaison correspondante 12 par une vis transversale 17b vissée dans un trou taraudé transversal 12a de la portion de liaison 12 correspondante et venant en appui radial sur le tronçon intérieur de la molette 17 filetée de réglage.

Simultanément, un moyen élastique de rattrapage de jeu, tel qu'un ressort hélicoïdal 17c, de force supérieure au ressort 22, est engagé entre la molette 17 filetée de réglage manuel d'écart minimum et la portion de liaison 12 correspondante, pour repousser en permanence la molette 17 filetée de réglage manuel d'écart minimum à l'écart de l'autre portion de liaison 11. Ainsi, le ressort 17c plaque en permanence les filets de la molette 17 contre les mêmes faces de filets du taraudage 16, que la vis transversale 17b soit serrée ou non.

La figure 10 illustre de façon schématique le fonctionnement du dispositif lors d'un travail. On retrouve la sonotrode 3 et le contre-outil 4. Au repos, c'est-à-dire en l'absence de matière à travailler, la sonotrode 3 peut être déplacée vers et à l'écart du contre-outil 4 par la manoeuvre de la molette 17 de réglage (figure 7), selon une course C.

On choisit ainsi l'écart minimum E, ou écartement au repos entre la sonotrode 3 et le contre-outil 4.

En sollicitant la sonotrode 3 par des vibrations ultrasonores produites par le convertisseur 5, on peut alors travailler une bande ou nappe de matière 23 thermofusible introduite dans la zone de travail 2 dans le sens de la progression 1. Par l'effet des vibrations ultrasonores, qui échauffent le matériau et tendent à le ramollir jusqu'à fusion, la bande ou nappe de matière 23 se trouve amincie dans son passage dans la zone de travail 2. Pour une coupe longitudinale de la bande ou nappe de matière 23, on choisit un écart minimum E faible.

Pour réaliser une soudure, on choisira un écart minimum E plus important : l'écart minimum E doit être inférieur à l'épaisseur initiale de la bande ou nappe de matière 23 de façon à presser suffisamment la matière pour la fondre dans la zone de travail 2 ; mais l'écart minimum E ne doit pas être trop faible, pour éviter de réduire exagérément l'épaisseur de la bande ou nappe de matière 23 lors du travail.

Une soudure par points peut être réalisée en prévoyant un contre-outil 4 en forme de rouleau cylindrique ayant des reliefs appropriés sur sa surface active 4b.

Si la bande ou nappe de matière 23 est très épaisse, ou dans l'hypothèse d'une fusion insuffisante du matériau, la sonotrode 3 peut s'écarter du contre-outil 4 grâce aux moyens de pivotement et au ressort 22.

Dans la description qui précède, la bande ou nappe de matière 23 est déplacée dans le sens de progression 1 illustré sur les figures, c'est-à-dire un sens perpendiculaire à l'axe transversal 8. Le dispositif pourra toutefois être utilisé, selon l'invention, pour travailler une bande ou nappe de matière en déplacement dans le sens de progression parallèle à l'axe transversal, par exemple en faisant pivoter si nécessaire la sonotrode 3 et/ou le contre-outil 4 de 90°. Cela permet par exemple de travailler une lisière de tissu.

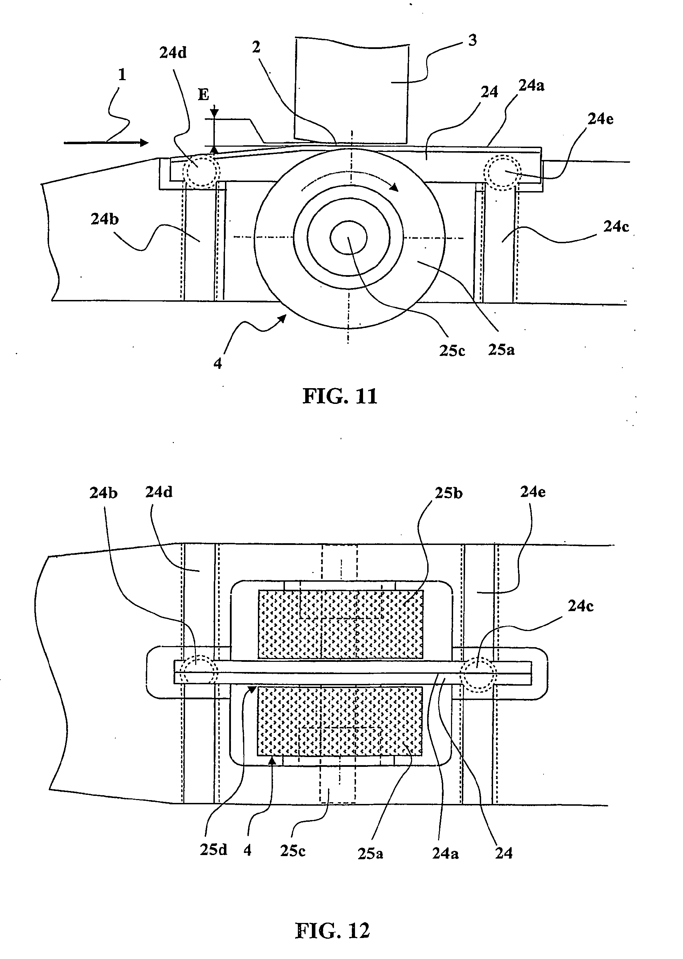

On considère maintenant les figures 11 à 14, qui illustrent une structure particulière de contre-outil selon l'invention.

Cette structure particulière de contre-outil a pour intérêt de réduire très sensiblement les risques d'effilochage d'un tissu en matière thermofusible lors d'une coupe longitudinale dans la bande ou nappe de tissu.

Pour obtenir cet effet, le contre-outil 4 comprend une partie centrale 24 fixe, étroite, orientée longitudinalement dans la direction de progression 1 de la bande ou nappe de matière 23 à travailler, avec une arête centrale 24a orientée face à la sonotrode 3 dans le plan longitudinal contenant la direction axiale I-I.

Le contre-outil 4 comprend par ailleurs deux parties rotatives cylindriques 25a et 25b à reliefs appropriés, de part et d'autre de la partie centrale fixe 24, les parties rotatives cylindriques 25a et 25b étant montées librement rotatives autour d'un axe transversal 25c.

L'arête centrale 24a de la partie centrale fixe 24 dépasse légèrement au-delà de la génératrice sommitale des deux parties rotatives cylindriques 25a et 25b dans la zone de travail 2, pour être légèrement plus rapprochée de la sonotrode 3.

On peut avantageusement prévoir que la partie centrale fixe 24 est réglable en position vers et à l'écart de la sonotrode 3, par des moyens de réglage schématiquement illustrés, par exemple des vis de relevage 24b et 24c.

On peut aussi prévoir que les moyens de réglage permettent, par exempte par des vis de centrage 24d et 24e, le réglage latéral de la position de la partie centrale fixe 24, pour éviter tout frottement avec les parties rotatives cylindriques 25a et 25b.

En pratique, les parties rotatives cylindriques 25a et 25b sont solidaires l'une de l'autre, montées sur un même moyeu et séparées par une gorge 25d dans laquelle est engagée la partie centrale fixe 24 du contre-outil 4.

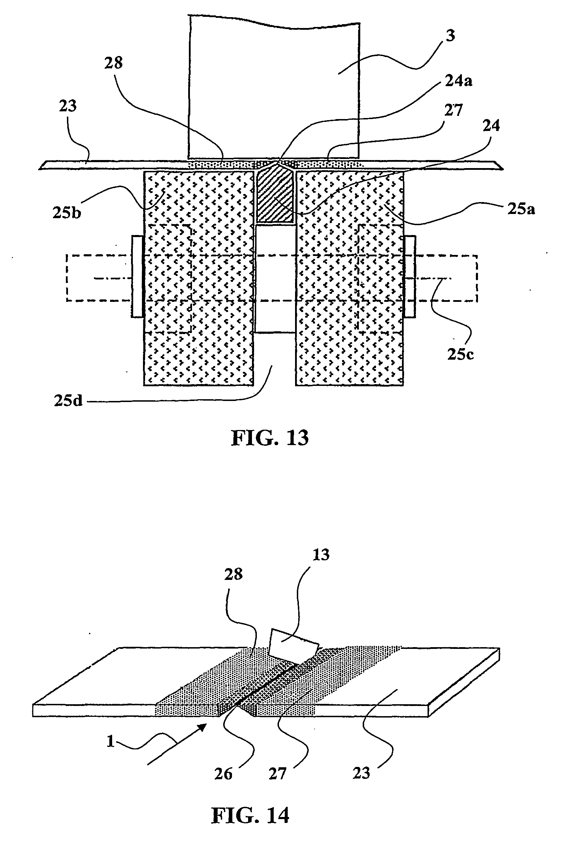

La figure 14 illustre le résultat obtenu par l'utilisation d'un tel contre-outil : une bande ou nappe de matière 23 tissée thermofusible avance dans la direction de progression 1, et glisse sur la partie centrale fixe 24 du contre-outil, face à la sonotrode fixe 3, de sorte que la partie centrale fixe 24 pénètre dans la matière en formant un sillon 26 longitudinal. Les bords du sillon 26 sont constitués de matière qui a été fondue de façon continue, assurant une soudure continue des bords du sillon 26, sur une largeur d'environ 1 mm de chaque côté de la ligne de coupe. Simultanément, les deux parties rotatives cylindriques 25a et 25b ont formé deux zones latérales 27 et 28, sur une largeur pouvant être de quelques millimètres, ou pouvant être de l'ordre de 20 à 25 mm, en fonction des besoins, dans lesquelles les reliefs des parties rotatives cylindriques 25a et 25b ont constitué des soudures par points, assurant une cohésion des fibres thermofusibles de la bande ou nappe de matière 23 tissée sans toutefois affecter la flexibilité.

Grâce au dispositif de limitation de pénétration de la sonotrode 3 et du contre-outil 4 dans la bande ou nappe de matière 23, on s'assure que le sillon 26 a une profondeur légèrement inférieure à l'épaisseur de la bande ou nappe de matière 23.

On peut ensuite aisément combiner ce travail avec une coupe par une lame de coupe 13 (figures 1 ou 3) disposée en aval de la zone de travail 2 et dans l'axe de la partie centrale fixe 24, la lame de coupe 13 ayant seulement une très faible épaisseur de matière à couper dans le fond du sillon 26.

De bons résultats peuvent être obtenus en prévoyant que les parties rotatives cylindriques 25a et 25b ont des reliefs en forme de picots pyramidaux, de section inférieure ou égale à 1 mm², et répartis selon un pas de 1 mm à 2 mm environ.

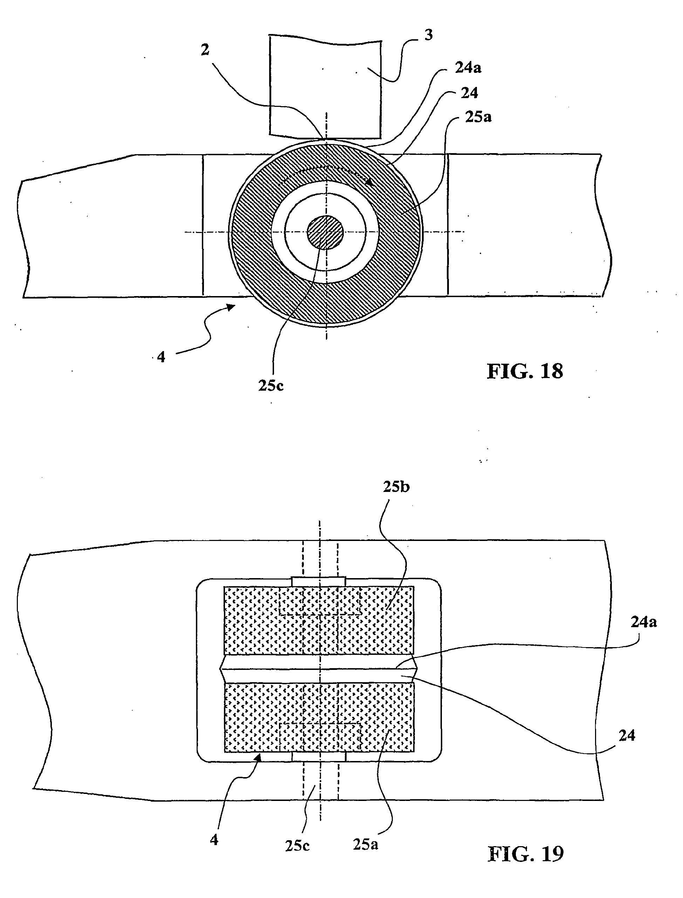

Les figures 18 et 19 illustrent une variante de contre-outil 4 selon l'invention pour réduire les risques d'effilochage d'un tissu en matière thermofusible. On retrouve deux parties rotatives cylindriques 25a et 25b à reliefs appropriés, montées librement rotatives autour d'un axe transversal 25c, comme sur les figures 11 à 13. La différence réside dans la partie centrale 24, qui est également rotative, solidaire des parties rotatives cylindriques 25a et 25b. La partie centrale 24 comporte une arête centrale 24a circulaire dans le plan longitudinal contenant la direction axiale I-I. L'arête centrale 24a dépasse légèrement au-delà de la génératrice sommitale des parties rotatives cylindriques 25a et 25b dans la zone de travail 2. La figure 14 illustre de façon similaire le résultat obtenu par l'utilisation d'un tel contre-outil.

On comprendra que l'invention prévoit ainsi un procédé pour travailler une bande ou nappe de matière thermofusible par ultrasons au moyen d'un dispositif précédemment défini, procédé dans lequel on effectue successivement le réglage de la force d'appui puis le réglage d'écart minimum E non nul, de sorte qu'on maintient un écartement supérieur à l'écart minimum E non nul entre la sonotrode 3 et le contre-outil 4, tout en maintenant une force élastique d'appui déterminée de la sonotrode 3 et du contre-outil 4 contre la bande ou nappe de matière 23 lorsque l'écartement est supérieur à l'écart minimum E non nul.

Avantageusement, le travail pour une découpe peut être réalisé en deux étapes successives rapprochées :
- on réalise par ultrasons, dans la bande ou nappe de matière 23, une zone fusionnée continue, c'est-à-dire la zone du sillon 26, bordée de deux zones de soudure par points, c'est-à-dire les deux zones latérales 27 et 28,
- on découpe mécaniquement la bande ou nappe de matière 23 dans la zone fusionnée ainsi réalisée, c'est-à-dire dans le fond du sillon 26, cette zone étant encore chaude, ce qui facilite encore la coupe.

Le contre-outil 4 selon les figures 11 à 13 peut être utilisé dans un dispositif tel qu'illustré sur les figures 1 et 2, notamment.

On peut en particulier trouver avantage à utiliser ce contre-outil avec un moyen mécanique à réglage manuel 10 qui limite efficacement la profondeur de pénétration de la sonotrode 3 et du contre-outil 4 dans la matière à travailler, laissant réaliser la finition de coupe par la lame de coupe fixe 13.

Cependant, le contre-outil 4 selon les figures 11 à 13 peut trouver des applications utiles, indépendamment de l'utilisation des autres moyens mécaniques à réglage manuel 10, et constitue ainsi une invention indépendante.

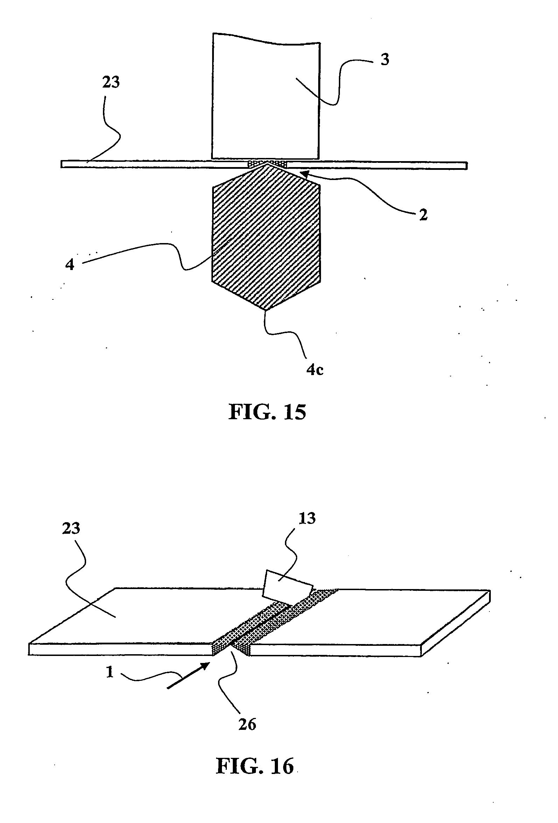

Les figures 15 et 16 illustrent une variante du procédé selon l'invention. Dans ce cas, on utilise un dispositif tel que représenté par exemple sur les figures 3 et 4. La figure 15 est une vue partielle de face à plus grande échelle, dans le voisinage de la zone de travail 2, en coupe transversale. On retrouve le contre-outil 4 à arête circulaire 4c.

La figure 16 illustre le résultat obtenu par l'utilisation d'un tel contre-outil 4 : la bande ou nappe de matière 23 thermofusible avance dans la direction de progression 1, et glisse sur l'arête circulaire 4c qui forme le sillon 26 dont les bords sont constitués de matière fondue, assurant une soudure continue. Une lame de coupe fixe 13 disposée en aval de la zone de travail 2 termine la coupe de la bande ou nappe de matière 23 dans le fond du sillon 26.

Dans tous les modes de réalisation décrits ci-dessus comportant un contre-outil 4 ayant au moins un élément en rotation selon l'axe transversal 4a, il peut être avantageux de monter l'élément rotatif sur des roulements. Un tel montage facilite le passage de la bande ou nappe de matière 23 par un meilleur roulage, et contribue ainsi à une meilleure qualité de la soudure tant en géométrie qu'en intensité.

En effet, le roulage favorisé par les roulements évite de solliciter en traction la zone de soudure, fragilisée durant l'échauffement par les ultrasons, garantissant ainsi une moindre déformation géométrique des empreintes laissées par les picots ou reliefs du contre-outil 4 dans la matière à travailler. En outre, le roulage étant plus fluide et moins sujet à des à-coups, le tissu peut être tiré plus régulièrement, évitant ainsi qu'une zone particulière de la soudure, en restant un peu trop sous la sonotrode ne soit sujette à un échauffement supérieur, venant affecter la qualité et/ou l'uniformité de la soudure.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour travailler une bande ou nappe de matière (23) par ultrasons, comprenant :
- une sonotrode (3), associée fonctionnellement à un convertisseur d'ultrasons (5) et portée par une première partie de corps de dispositif (6), d'un premier côté d'une zone de travail (2),
- un contre-outil (4), tenu en opposition avec la sonotrode (3) par une seconde partie de corps de dispositif (7), de l'autre côté de la zone de travail (2),
- les première (6) et seconde (7) parties de corps de dispositif étant déplaçables l'une par rapport à l'autre selon un mouvement produisant le déplacement relatif de la sonotrode (3) et du contre-outil (4) vers ou à l'écart l'un de l'autre,
- des moyens mécaniques à réglage manuel (10), disposés entre une première portion de liaison (11) de la première partie de corps de dispositif (6) et une seconde portion de liaison (12) de la seconde partie de corps de dispositif (7), ayant des moyens élastiques (22) pour solliciter élastiquement en déplacement relatif les première (11) et seconde (12) portions de liaison dans le sens du rapprochement relatif de la sonotrode (3) et du contre-outil (4) dans la zone de travail (2),
- des moyens de réglage de force élastique d'appui (21), aptes à modifier l'état de compression des moyens élastiques (22), dans les moyens mécaniques à réglage manuel (10),
- dans les moyens mécaniques à réglage manuel (10), des moyens de butée de limitation de rapprochement (20), qui s'opposent au déplacement relatif entre les première (11) et seconde (12) portions de liaison dans le sens d'un rapprochement relatif de la sonotrode (3) et du contre-outil (4) en deçà d'un écart minimum (E), tout en autorisant leur déplacement dans le sens opposé,
- dans les moyens mécaniques à réglage manuel (10), un organe de réglage manuel d'écart minimum (17), par lequel on peut régler la position de la butée de limitation de rapprochement (20) et régler ainsi l'écart minimum (E),
**caractérisé en ce que**, dans les moyens mécaniques à réglage manuel (10), les moyens de butée de limitation de rapprochement (20) et les moyens élastiques (22) sont en appui direct ou indirect contre l'organe de réglage manuel d'écart minimum (17), de sorte que l'actionnement de l'organe de réglage d'écart minimum (17) pour modifier l'écart minimum (E) ne modifie pas la force élastique d'appui produite par les moyens élastiques (22).

2. Dispositif selon la revendication 1, **caractérisé en ce que :**
- les moyens de limitation de rapprochement (20) comportent une butée (20a) venant s'engager sélectivement en appui contre l'une des portions de liaison (11, 12), et sont portés par l'organe de réglage manuel d'écart minimum (17),
- l'organe de réglage manuel d'écart minimum (17) est monté mobile sur l'autre des portions de liaison (11, 12),
- les moyens élastiques (22) sont engagés fonctionnellement entre l'organe de réglage manuel d'écart minimum (17) et ladite une des portions de liaison (11, 12).

3. Dispositif selon la revendication 2, **caractérisé en ce que,** dans les moyens mécaniques à réglage manuel (10) :
- les moyens de butée de limitation de rapprochement comprennent un tirant (20) engagé à coulissement dans l'une au moins des portions de liaison (11, 12) des première (6) et seconde (7) parties de corps de dispositif, le tirant (20) comportant une tête de première extrémité (20a) engagée en appui axial contre ladite une des portions de liaison (11, 12),
- le tirant (20) comporte un corps fileté (20b) traversant un trou axial (18) d'une molette (17) filetée de réglage manuel d'écart minimum et recevant un écrou de réglage (21) en appui axial contre ladite molette (17) filetée de réglage,
- la molette (17) filetée de réglage est vissée fonctionnellement dans un alésage taraudé (16) de l'autre des portions de liaison (11, 12),
- au moins un ressort de compression (22) est engagé axialement autour du tirant (20) entre la molette (17) filetée de réglage et ladite une des portions de liaison (11, 12), à l'opposé de l'appui de la tête de première extrémité (20a).

4. Dispositif selon la revendication 3, **caractérisé en ce que** ladite une des portions de liaison (11, 12) est la première portion de liaison (11) de la première partie de corps (6), et ladite autre des portions de liaison (11, 12) est la seconde partie de liaison (12) de la seconde partie de corps (7).

5. Dispositif selon l'une quelconque des revendications 1 à 4, **caractérisé en ce que** les première (6) et seconde (7) parties de corps de dispositif sont articulées en rotation l'une par rapport à l'autre selon un axe transversal (8) proche de la zone de travail (2), tandis que les portions de liaison (11, 12) des première (6) et seconde (7) parties de corps de dispositif, qui reçoivent les moyens mécaniques à réglage manuel (10), sont opposées à la zone de travail (2) par rapport à l'axe transversal (8) et sont à l'écart de l'axe transversal (8), au voisinage de la partie distale (5a) du convertisseur d'ultrasons (5).

6. Dispositif selon l'une quelconque des revendications 3 à 5, **caractérisé en ce que** la molette (17) filetée de réglage est bloquée sélectivement en position sur la portion de liaison (11, 12) correspondante par un contre-écrou (17a) vissé sur un tronçon fileté.

7. Dispositif selon l'une quelconque des revendications 3 à 5, **caractérisé en ce que :**
- la molette (17) filetée de réglage est bloquée sélectivement en position sur la portion de liaison (11, 12) correspondante par une vis transversale (17b) vissée dans un trou taraudé transversal (12a) de la portion de liaison (11, 12) correspondante et venant en appui radial sur le tronçon intérieur de la molette (17) filetée de réglage,
- un moyen élastique de rattrapage de jeu (17c) est engagé entre la molette (17) filetée de réglage et la portion de liaison (11, 12) correspondante pour repousser en permanence la molette (17) filetée de réglage à l'écart de l'autre portion de liaison (11, 12).

8. Dispositif selon l'une quelconque des revendications 1 à 7, **caractérisé en ce qu'**il est agencé pour réaliser la coupe ou la soudure de produits thermofusibles (23) qui défilent en continu.

9. Dispositif selon l'une quelconque des revendications 1 à 7, **caractérisé en ce que :**
- le contre-outil (4) comprend un rouleau rotatif à axe transversal (4a), comportant sur sa surface active (4b) des reliefs appropriés,
- la sonotrode (3) comporte une surface active cylindrique (3a) d'axe transversal.

10. Dispositif selon l'une quelconque des revendications 1 à 7, **caractérisé en ce que :**
- le contre-outil (4) comporte une surface active à arête circulaire (4c) d'axe transversal (4d), et est fixe sur la seconde partie de corps de dispositif (7),
- la sonotrode (3) comporte une surface active cylindrique (3a) d'axe transversal.

11. Dispositif selon l'une des revendications 9 ou 10, **caractérisé en ce qu'**il comporte en outre une lame de coupe (13) placée en aval de la zone de travail (2).

12. Procédé pour travailler une bande ou nappe de matière (23) par ultrasons, au moyen d'un dispositif selon l'une quelconque des revendications 1 à 11, **caractérisé en ce qu'**on règle tout d'abord une force d'appui par actionnement des moyens de réglage de force élastique d'appui (21), puis on règle un écart minimum (E) non nul par actionnement de l'organe de réglage manuel d'écart minimum (17), de sorte que l'on' maintient un écartement supérieur à l'écart minimum (E) non nul entre la sonotrode (3) et le contre-outil (4), tout en maintenant une force élastique d'appui déterminée de la sonotrode (3) vers le contre-outil (4) contre la bande ou nappe de matière (23) lorsque l'écartement est supérieur à l'écart minimum (E) non nul.

13. Procédé selon la revendication 12, **caractérisé en ce que :**
- on réalise par ultrasons, dans la bande ou nappe de matière (23) à travailler, une zone fusionnée continue à sillon (26) longitudinal bordée ou non d'une ou deux zones de soudure par points (27, 28),
- on découpe mécaniquement la bande ou nappe de matière (23) dans la zone fusionnée continue (26) ainsi réduite en épaisseur et encore chaude.

## Claims

1. Device for ultrasound processing of a strip or web of material (23), comprising :
- a sonotrode (3) functionally associated with an ultrasound converter (5) and carried by a first device body part (6) on a first side of a working area (2),
- an anvil (4) held opposite the sonotrode (3) by a second device body part (7) on the other side of the working area (2),
- the first device body part (6) and the second device body part (7) being displaceable relative to each other with a movement producing relative displacement of the sonotrode (3) and of the anvil (4) toward or away from each other,
- manually adjustable mechanical means (10), disposed between a first connecting portion (11) on the first device body part (6) and a second connecting portion (12) on the second device body part (7), and having elastic means (22) for spring-loading in relative displacement the first connecting portion (11) and the second connecting portion (12) in the direction of relative movement toward each other of the sonotrode (3) and the anvil (4) in the working area (2),
- elastic bearing force adjustment means (21) in the manually adjustable mechanical means (10), for modifying the state of compression of the elastic means (22),
- abutment means (20) in the manually adjustable mechanical means (10), for limiting convergent movement, which oppose relative displacement between the first connecting portion (11) and the second connecting portion (12) in the direction of relative movement toward each other of the sonotrode (3) and the anvil (4) short of a minimum separation (E), whilst allowing displacement thereof in the opposite direction,
- a manual minimum separation adjustment member (17) in the manually adjustable mechanical means (10), for adjusting the position of the abutment (20) for limiting convergent movement and thus adjusting the minimum separation (E),
**characterized in that,** in the manually adjustable mechanical means (10), the abutment means (20) for limiting convergent movement and the elastic means (22) are in direct or indirect bearing engagement against the manual minimum separation adjustment member (17) so that operation of the minimum separation adjustment member (17) to modify the minimum separation (E) does not modify the elastic bearing force produced by the elastic means (22).

2. Device according to claim 1, **characterized in that :**
- the means (20) for limiting convergent movement include an abutment (20a) in selected bearing engagement against one of the connecting portions (11, 12) and are carried by the manual minimum separation adjustment member (17),
- the manual minimum separation adjustment member (17) is mounted to be mobile along the other connecting portion (11, 12),
- the elastic means (22) are functionally engaged between the manual minimum separation adjustment member (17) and said one connecting portion (11, 12).

3. Device according to claim 2, **characterized in that,** in the manually adjustable mechanical means (10) :
- the abutment means for limiting convergent movement comprise a tie-rod (20) slidably engaged in at least one of the connecting portions (11, 12) on the first device body part (6) and the second device body part (7), the tie-rod (20) having a first end head (20a) in axial bearing engagement against said one connecting portion (11, 12),
- the tie-rod (20) includes a threaded body (20b) passing through an axial hole (18) in a threaded thumbwheel (17) for manual adjustment of the minimum separation and receiving an adjuster nut (21) in axial bearing engagement against said threaded adjustment thumbwheel (17),
- the threaded adjustment thumbwheel (17) is functionally screwed into a threaded bore (16) in the other connecting portion (11, 12),
- at least one compression spring (22) is engaged axially around the tie-rod (20) between the threaded adjustment thumbwheel (17) and said one connecting portion (11, 12) on the opposite side to the bearing engagement of the first end head (20a).

4. Device according to claim 3, **characterized in that** said one connecting portion (11, 12) is the first connecting portion (11) on the first body part (6) and said other connecting portion (11, 12) is the second connecting part (12) on the second body part (7).

5. Device according to any one of claims 1 to 4, **characterized in that** the first device body part (6) and the second device body part (7) are rotationally articulated to each other about a transverse axis (8) close to the working area (2), whereas the connecting portions (11, 12) on the first device body part (6) and the second device body part (7), which receive the manually adjustable mechanical means (10), are on the opposite side of the transverse axis (8) to the working area (2) and are remote from the transverse axis (8), in the vicinity of the distal part (5a) of the ultrasound converter (5).

6. Device according to any one of claims 3 to 5, **characterized in that** the threaded adjustment thumbwheel (17) is selectively locked in position on the corresponding connecting portion (11, 12) by a locknut (17a) screwed onto a threaded section.

7. Device according to any one of claims 3 to 5, **characterized in that :**
- the threaded adjustment thumbwheel (17) is selectively locked in position on the corresponding connecting portion (11, 12) by a transverse screw (17b) screwed into a transverse threaded hole (12a) in the corresponding connecting portion (11, 12) and in radial bearing engagement on the interior section of the threaded adjustment thumbwheel (17),
- elastic means (17c) for taking up slack are engaged between the threaded adjustment thumbwheel (17) and the corresponding connecting portion (11, 12) to push the threaded adjustment thumbwheel (17) at all times away from the other connecting portion (11, 12).

8. Device according to any one of claims 1 to 7, **characterized in that** it is adapted to cut or weld continuously moving thermofusible products (23).

9. Device according to any one of claims 1 to 7, **characterized in that :**
- the anvil (4) comprises a rotary roller with a transverse axis (4a), having appropriate raised patterns on its active surface (4b), and
- the sonotrode (3) has a cylindrical active surface (3a) with a transverse axis.

10. Device according to any one of claims 1 to 7, **characterized in that :**
- the anvil (4) has an active surface with a circular ridge (4c) with a transverse axis (4d) and is fixed to the second device body part (7), and
- the sonotrode (3) has a cylindrical active surface (3a) with a transverse axis.

11. Device according to either of claims 9 or 10, **characterized in that** it further includes a cutting blade (13) placed on the downstream side of the working area (2).

12. Method for ultrasound processing of a strip or web of material (23) by means of a device according to any one of claims 1 to 11, **characterized in that** a bearing force is adjusted first by operating elastic bearing force adjustment means (21), after which a non-null minimum separation (E) is adjusted by operating the manual minimum separation adjustment member (17), so that a separation greater than the non-null minimum separation (E) is maintained between the sonotrode (3) and the anvil (4) whilst maintaining a particular elastic bearing force from the sonotrode (3) toward the anvil (4) against the strip or web of material (23) if the separation is greater than the non-null minimum separation (E).

13. Method according to claim 12, **characterized in that :**
- a continuous melted area is produced by ultrasound in the strip or web of material (23) to be processed with a longitudinal groove (26) that may be bordered by one or two spot weld areas (27, 28) or not,
- the strip or web of material (23) is cut mechanically in the continuous melted area (26) that is reduced in thickness in this way, while it is still hot.

## Patentansprüche

1. Vorrichtung zum Bearbeiten eines Materialbandes oder -tuches (23) mittels Ultraschall, enthaltend:
- eine Sonotrode (3), die funktionell einem Ultraschallwandler (5) zugeordnet ist und von einem ersten Teil (6) des Körpers der Vorrichtung auf einer ersten Seite einer Arbeitszone (2) gehalten ist,
- ein Gegenwerkzeug (4), das von einem zweiten Teil (7) des Körpers der Vorrichtung auf der anderen Seite der Arbeitszone (2) gegenüberliegend zur Sonotrode (3) gehalten ist,
- wobei der erste (6) und zweite (7) Teil des Körpers der Vorrichtung wechselseitig gegeneinander verschieblich sind, gemäß einer Bewegung, die eine Relativverschiebung der Sonotrode (3) und des Gegenwerkzeuges (4) aufeinander zu oder voneinander fort erzeugt,
- mechanische Mittel (10) zum manuellen Einstellen, die zwischen einem ersten Verbindungsteil (11) des ersten Teiles (6) des Körpers der Vorrichtung und einem zweiten Verbindungsteil (12) des zweiten Teiles (7) des Körpers der Vorrichtung angeordnet sind, die elastische Mittel (22) zum elastischen Spannen mit Verschiebung relativ zu den ersten (11) und zweiten (12) Verbindungsteilen im Sinne einer relativen Annäherung der Sonotrode (3) und des Gegenwerkzeuges (4) in der Arbeitszone (2) aufweisen,
- Mittel (21) zum Einstellen einer elastischen Anschlagkraft, die ausgebildet sind, den Kompressionszustand der elastischen Mittel (22) in den mechanischen Mitteln (10) zum manuellen Einstellen zu modifizieren,
- in den mechanischen Mitteln (10) zum manuellen Einstellen Anschlagmittel (20) zur Begrenzung der Annäherung, die sich bei relativer Verschiebung zwischen den ersten (11) und zweiten (12) Verbindungsteilen in Richtung einer relativen Annäherung der Sonotrode (3) und des Gegenwerkzeuges (4) diesseits eines minimalen Abstandes (E) gegenüberliegen und damit deren Verschiebung im entgegengesetzten Sinne ermöglichen,
- in den mechanischen Mitteln (10) zum manuellen Einstellen ein Organ (17) zum manuellen Einstellen eines minimalen Abstandes, mittels dessen man die Position des Anschlages (20) für die Begrenzung der Annäherung einstellen kann und auch zum Einstellen des minimalen Abstandes (E),
**dadurch gekennzeichnet, daß** in den mechanischen Mitteln (10) zum manuellen Einstellen die Anschlagmittel (20) zur Begrenzung der Annäherung und die elastischen Mittel (22) in direktem oder indirektem Anschlag gegen das Organ (17) zum manuellen Einstellen des minimalen Abstandes sind, derart, daß die Betätigung des Organes (17) zum Einstellen des minimalen Abstandes zum Modifizieren des minimalen Abstandes (E) die elastische Anschlagkraft, die von den elastischen Mitteln (22) erzeugt wird, nicht verändert.

2. Vorrichtung nach Anspruch 1, **dadurch gekennzeichnet, daß:**
- die Mittel (20) zur Begrenzung der Annäherung einen Anschlag (20a) enthalten, der selektiv in Anschlag gegen einen der Verbindungsteile (11, 12) in Eingriff kommt und von dem Organ (17) zum manuellen Einstellen des minimalen Abstandes getragen sind,
- das Organ (17) zum manuellen Einstellen des minimalen Abstandes beweglich auf dem anderen der Verbindungsteile (11, 12) montiert ist,
- die elastischen Mittel (22) funktionell zwischen dem Organ (17) zum manuellen Einstellen des minimalen Abstandes und dem genannten einen der Verbindungsteile (11, 12) in Eingriff stehen.

3. Vorrichtung nach Anspruch 2, **dadurch gekennzeichnet, daß** in den mechanischen Mitteln (10) zum manuellen Einstellen:
- die Anschlagmittel zur Begrenzung der Annäherung einen Zuganker (20) enthalten, der verschieblich in mindestens einem der Verbindungsteile (11, 12) des ersten (6) und zweiten (7) Teiles des Körpers der Vorrichtung in Eingriff steht, wobei der Zuganker (20) einen ersten Endkopf (20a) aufweist, der in axialem Anschlag gegen den genannten einen der Verbindungsteile (11, 12) steht,
- der Zuganker (20) trägt einen Gewindekörper (20b), der ein axiales Loch (18) einer mit Gewinde versehenen Rändelscheibe (17) zum manuellen Einstellen des minimalen Abstandes durchquert und eine Einstellmutter (21) aufnimmt im axialen Anschlag gegen die genannte mit Gewinde versehene Rändelscheibe (17) zum Einstellen,
- die mit Gewinde versehene Rändelscheibe (17) zum Einstellen ist funktionell in einer Gewindebohrung (16) des anderen der Verbindungsteile (11, 12) angeordnet,
- mindestens eine Kompressionsfeder (22) ist axial im Eingriff um den Zuganker (20) zwischen der mit Gewinde versehenen Rändelscheibe (17) zum Einstellen und dem genannten einen der Verbindungsteile (11, 12) in gegenüberliegendem Anschlag zum Endkopf (20a) des ersten Endes.

4. Vorrichtung nach Anspruch 3, **dadurch gekennzeichnet, daß** der genannte eine der Verbindungsteile (11, 12) der erste Verbindungsteil (11) des ersten Teiles (6) des Körpers ist und daß der andere der Verbindungsteile (11, 12) der zweite Verbindungsteil (12) des zweiten Teiles (7) des Körpers ist.

5. Vorrichtung nach irgendeinem der Ansprüche 1 bis 4, **dadurch gekennzeichnet, daß** der erste (6) und zweite (7) Teil des Körpers der Vorrichtung drehbar in Bezug aufeinander um eine Querachse (8) nahe der Arbeitszone (2) angeordnet sind, während die Verbindungsteile (11, 12) des ersten (6) und zweiten (7) Teiles des Körpers der Vorrichtung, die die mechanischen Mittel (10) zum manuellen Einstellen aufnehmen, gegenüberliegend zur Arbeitszone (2) in Bezug auf eine Querachse (8) angeordnet sind und im Abstand zur Querachse (8) liegen, in Nachbarschaft des distalen Teiles (5a) des Ultraschallwandlers (5).

6. Vorrichtung nach irgendeinem der Ansprüche 3 bis 5, **dadurch gekennzeichnet, daß** die mit Gewinde versehene Rändelscheibe (17) zum Einstellen selektiv in einer Position auf dem Verbindungsteil (11, 12) blockiert ist, entsprechend durch eine Gegenmutter (17a), die auf einem Gewindeabschnitt angeordnet ist.

7. Vorrichtung nach irgendeinem der Ansprüche 3 bis 5, **dadurch gekennzeichnet, daß:**
- die mit Gewinde versehene Rändelscheibe (17) zum Einstellen selektiv in einer Position auf dem Verbindungsteil (11, 12) blockiert, entsprechend durch eine quer verlaufenden Schraube (17b), die in eine quer verlaufende Gewindebohrung (12a) des Verbindungsteiles (11, 12) eingeschraubt ist und in radialen Anschlag gegen den inneren Abschnitt der mit Gewinde versehenen Rändelscheibe (17) zum Einstellen kommt,
- ein elastisches Rückzugmittel (17c) mit Spiel zwischen der mit Gewinde versehenen Rändelscheibe (17) zum Einstellen und dem entsprechenden Verbindungsteil (11, 12) in Eingriff steht, um die mit Gewinde versehene Rändelscheibe (17) zum Einstellen ständig in einem Abstand zu dem anderen Verbindungsteil (11, 12) zurückzudrücken.

8. Vorrichtung nach irgendeinem der Ansprüche 1 bis 7, **dadurch gekennzeichnet, daß** sie dazu eingerichtet ist, den Schnitt oder das Verschweißen von thermisch schweißbaren Produkten (23), die kontinuierlich vorbeilaufen, durchzuführen.

9. Vorrichtung nach irgendeinem der Ansprüche 1 bis 7, **dadurch gekennzeichnet, daß:**
- das Gegenwerkzeug (4) eine um eine Querachse (4a) drehbare Rolle aufweist, die an ihrer aktiven Oberfläche (4b) geeignete Reliefs trägt,
- die Sonotrode (3) eine aktive zylindrische Oberfläche (3a) mit transversaler Achse aufweist.

10. Vorrichtung nach irgendeinem der Ansprüche 1 bis 7, **dadurch gekennzeichnet, daß:**
- das Gegenwerkzeug (4) eine aktive Oberfläche mit einem rings umlaufenden Wulst (4c) mit transversaler Achse (4d) aufweist und an dem zweiten Teil (7) des Körpers der Vorrichtung befestigt ist,
- die Sonotrode (3) eine zylindrische aktive Oberfläche (3a) mit transversaler Achse aufweist.

11. Vorrichtung nach einem der Ansprüche 9 oder 10, **dadurch gekennzeichnet, daß** sie zusätzlich eine Schneidklinge (13) aufweist, die stromabwärts der Arbeitszone (2) angeordnet ist.

12. Verfahren zum Bearbeiten eines Materialbandes oder -tuches (23) mittels Ultraschall mittels einer Vorrichtung nach irgendeinem der Ansprüche 1 bis 11, **dadurch gekennzeichnet, daß** man zuerst eine Anschlagkraft durch Betätigen von Einstellmitteln (21) einer elastischen Anschlagkraft einstellt, anschließend einen minimalen nicht Null betragenden Abstand (E) durch Betätigen eines Organes (17) zum manuellen Einstellen des minimalen Abstandes betätigt, derart, daß man einen Abstand aufrecht erhält, der größer ist als der nicht Null betragende minimale Abstand (E) zwischen der Sonotrode (3) und dem Gegenwerkzeug (4), wobei man dabei eine vorbestimmte elastische Anschlagkraft der Sonotrode (3) in Richtung auf das Gegenwerkzeug (4) gegen das Materialband oder -tuch (23) aufrecht erhält, bis der Abstand größer ist als der nicht Null betragende minimale Abstand (E).

13. Verfahren nach Anspruch 12, **dadurch gekennzeichnet, daß:**
- man mittels Ultraschall in dem zum Bearbeiten Materialband oder -tuch (23) eine fortlaufende Schmelzzone mit längs verlaufender Furche (26) realisiert, die von einer oder zwei punktförmigen Schmelzzonen (27, 28) gesäumt ist oder nicht,
- man das Materialband oder -tuch (23) in der fortlaufenden Schmelzzone (26) schneidet, die folglich verringerte Dicke hat und noch heiß ist.
